Europäisches Patentamt

European Patent Office

Office européen des brevets

(11) Veröffentlichungsnummer: **0 281 919**
**A2**

## (12) EUROPÄISCHE PATENTANMELDUNG

(21) Anmeldenummer: **88103159.5**

(22) Anmeldetag: **02.03.88**

(51) Int. Cl.⁴: **C08G 2/20**

(30) Priorität: **11.03.87 DE 3707689**

(43) Veröffentlichungstag der Anmeldung:
**14.09.88 Patentblatt 88/37**

(84) Benannte Vertragsstaaten:
**DE FR GB IT**

(71) Anmelder: **BASF Aktiengesellschaft
Carl-Bosch-Strasse 38
D-6700 Ludwigshafen(DE)**

(72) Erfinder: **Kempter, Fritz Erdmann, Dr.
L 2,14
D-6800 Mannheim 1(DE)**
Erfinder: **Matejcek, Franz, Dr.
Theodor-Heuss-Strasse 10
D-6715 Lambsheim(DE)**
Erfinder: **Neubach, Werner
Lindenberger Strasse 9
D-6700 Ludwigshafen(DE)**
Erfinder: **Busse, Gerd
Thomas-Mann-Strasse 28
D-6704 Mutterstadt(DE)**

(54) **Formaldehydarme Bindemittel.**

(57) Die vorliegende Erfindung betrifft formaldehydarme Bindemittel, die im wesentlichen aus

A) 5 bis 80 Gew.% eines wasserlöslichen, durch alkalische Kondensation hergestellten Produktes der Carbonylzahl 0 bis 200 aus 0,1 bis 0,4 mol eines aliphatischen oder cycloaliphatischen kondensationsfähigen Ketons und 1 mol Formaldehyd und

B) 20 bis 95 Gew.% 4,5-Dihydroxyimidazolidinon-2 und/oder dessen unveretherten, partiell veretherten oder vollständig veretherten Kondensationsprodukten mit einem aliphatischen Mono-oder Dialdehyd bestehen, sowie die Verwendung solcher Bindemittel.

## Formaldehydarme Bindemittel

Die vorliegende Erfindung betrifft formaldehydarme Bindemittel, die im wesentlichen aus

A) 5 bis 80 Gew.% eines wasserlöslichen, durch alkalische Kondensation hergestellten Produktes der Carbonylzahl 0 bis 200 aus 0,1 bis 0,4 mol eines aliphatischen oder cycloaliphatischen kondensationsfähigen Ketons und 1 mol Formaldehyd und

B) 20 bis 95 Gew.% 4,5-Dihydroxyimidazolidinon-2 und/oder dessen unveretherten, partiell veretherten oder vollständig veretherten Kondensationsprodukten mit mindestens einem der Aldehyde Formaldehyd, Glyoxal oder Glutardialdehyd bestehen, sowie die Verwendung solcher Bindemittel.

Keton-Formaldehyd-Kondensationsprodukte sind bekannt und z.B. in Houben-Weyl, Methoden der organischen Chemie, Band XIV/2, 1963, S. 416 ff. beschrieben. Je nach molarem Keton-Formaldehyd-Verhältnis werden hochmolekulare oder methylolreiche oder cyclische Acetale oder Äther gebildet.

Die methylolreichen Keton-Formaldehyd-Kondensationsprodukte lassen sich mit den verschiedensten mit Formaldehyd kondensierbaren Verbindungen wie Amino-oder Phenolharzen kombinieren. So beschreibt die JP-OS 85/18551 ein Beschichtungsmittel auf Basis von Keton-Formaldehyd-Kondensationsprodukten mit methylolierten und veretherten Melaminharzen, das unter Säurekatalyse gehärtet wird. Diese Produkte weisen teilweise nur eine geringe Wasserlöslichkeit auf, was die Verwendung von organischen Lösungsmitteln notwendig macht.

Die JP-OS 81/24474 beschreibt einen Klebstoff auf Basis eines Aceton-Formaldehyd-Kondensationsproduktes mit z.B. einem Harnstoff-Formaldehyd-Kondensationsprodukt, der alkalisch gehärtet wird.

Alle diese Produkte weisen einen unerwünscht hohen Gehalt an freiem Formaldehyd auf. Beim Härten der Beschichtungsmittel bei höheren Temperaturen werden unerwünscht hohe Anteile des eingebauten Formaldehyds abgespalten.

Der Erfindung lag daher die Aufgabe zugrunde, Bindemittel bereitzustellen, die einen niedrigen Gehalt sowohl an freiem Formaldehyd als auch an thermisch abspaltbarem Formaldehyd aufweisen. Darüber hinaus sollen sie wasserlöslich und lagerstabil sein.

Diese Aufgabe wurde durch Bindemittel gelöst, die im wesentlichen aus

A) 5 bis 80 Gew.% eines wasserlöslichen, durch alkalische Kondensation hergestellten Produktes der Carbonylzahl 0 bis 200 aus 0,1 bis 0,4 mol eines aliphatischen oder cycloaliphatischen kondensationsfähigen Ketons und 1 mol Formaldehyd und

B) 20 bis 95 Gew.% 4,5-Dihydroxyimidazolidinon-2 und/oder dessen unveretherten, partiell veretherten oder vollständig veretherten Kondensationsprodukten mit einem aliphatischen Mono-oder Dialdehyd. bestehen.

Zur Herstellung der Komponente A) eignen sich die niedrigen Glieder der homologen Reihe der Dialkylketone, wie Aceton, Methylethylketon, Diacetonalkohol oder Cyclohexanon eingesetzt. Begrenzt wird der Einsatz der höhermolekularen Ketone durch die angestrebte Wasserlöslichkeit der entsprechenden Kondensationsprodukte. Besonders bevorzugt wird Aceton eingesetzt.

Entsprechend den zur Verfügung stehenden hydroximethylierbaren CH-aciden Gruppierungen gelten für jedes Keton andere optimale molare Keton-Formaldehyd-Verhältnisse.

Für Aceton mit der höchstmöglichen Anzahl reaktionsfähiger CH-Bindungen (6) wird ein molares Keton-Formaldehyd-Verhältnis von 1 : 3,75 bis 1 : 7,0, bevorzugt 1 : 4,0 bis 1 : 6,0, empfohlen. Für Ketone mit 5 reaktionsfähigen CH-Bindungen gelten folgende Verhältnisse: 1 : 3,0 bis 1 : 6,0, bevorzugt 1 : 3,5 bis 1 : 5,0. Bei den angegebenen Einsatzverhältnissen von Keton und Formaldehyd wird praktisch der gesamte Formaldehyd umgesetzt, so daß die wäßrige Reaktionslösung weniger als 1,5 Gew.-%, in der Regel sogar weniger als 0,2 Gew.-% freien Formaldehyd enthält.

Die alkalische Kondensation der Ketone mit Formaldehyd wird bevorzugt in wäßriger Lösung, eventuell in Anwesenheit von Alkoholen, bei Temperaturen von 20 bis 70°C, bevorzugt 30 bis 60°C, durchgeführt, wobei besonders gegen Ende der Reaktion, also bei niedrigen Gehalten an freiem Formaldehyd niedrigere Temperaturen bevorzugt angewendet werden. Vorzugsweise nimmt man die Kondensation bei einem pH-Wert zwischen 8 und 12, besonders zwischen 10 und 11,5 vor.

Um eine möglichst große Umsetzung der Keto-Gruppen des Ketonharzes zu erreichen, die durch die niedrige Carbonylzahl (mg KOH/g Feststoff, bestimmt nach der Planwäge-Glasmethode nach Heidbrink, DIN 53 189) von 0 bis 200, bevorzugt 60 bis 180, gekennzeichnet ist, sind für die Kondensation 5 bis 15 Gew.% Base, bevorzugt 6 bis 12 Gew.%, bezogen auf Kondensat, notwendig. Die Basen werden in Form ihrer unlöslichen Salze entfernt. Wegen der Vielzahl unlöslicher Salze wird deshalb als Base bevorzugt Calciumhydroxid in bekannter Weise eingesetzt und in Form seiner Formiate, Oxalate, Phosphate oder Sulfate abgetrennt. Geeignete andere Basen sind z.B. Natriumhydroxid, Kaliumhydroxid, Natriumcarbonat, Kaliumcarbonat, Bariumhydroxid.

Die Kondensationsprodukte A) sind farblose bis leicht gefärbte viskose Substanzen. Der Aschegehalt wird bei Entfernung des z.B. Calciumformiates im allgemeinen mit 0,1 bis 0,3 Gew.% bestimmt. Der Feststoffgehalt der Produkte kann bis etwa 98 Gew.% gesteigert werden.

Die Bestimmung des Feststoffgehaltes erfolgte nach den modifizierten DIN-Vorschriften 53 216 und 53 189 (s. Seite 5).

Die Komponente B) dient als Vernetzungsmittel für die Keton-Formaldehyd-Kondensationsprodukte. Als Komponente B) wird der cyclische Harnstoff 4,5-Dihydroxyimidazolidinon-2 verwendet und/oder dessen Kondensationsprodukte mit einem aliphatischen Mono-oder Dialdehyd mit bis zu 5 C-Atomen, wie beispielsweise Formaldehyd, Glyoxal oder Glutardialdehyd, wobei auch Gemische dieser Aldehyde verwendet werden können. Beispielsweise kann aus einem Mol 4,5-Dihydroxyimidazolidinon-2 mit zwei Mol Formaldehyd das 1,3-Dimethylol-4,5-dihydroxyimidazolidinon-2 hergestellt werden, das mit 0,5 bis 2 Mol Glyoxal kondensiert werden kann.

Allgemein wird ein molares Harnstoff-Aldehyd-Verhältnis von 0,1:1 bis 10:1, bevorzugt 0,5:1 bis 2:1, bezogen auf unsubstituierten Harnstoff, verwendet.

Bei der Kondensationsreaktion können auch Alkohole, beispielsweise Methanol, Ethanol, n-Propanol, n-Butanol, Methylglykol oder deren Gemische mitverwendet werden, wobei partiell oder vollständig veretherte Kondensationsprodukte entstehen.

Kondensationsprodukte auf Basis cyclischer Harnstoffe und Glyoxal sind beispielsweise in der US-PS 4,285,690 und der US-PS 4,343,655 beschrieben.

Zur Herstellung der erfindungsgemäßen Bindemittel werden 5 bis 80 Gew.% der Komponente A) mit 20 bis 95 Gew.% der Komponente B) gemischt.

Das bevorzugte Mischungsverhältnis liegt bei 10 bis 70 Gew.% der Komponente A) zu 30 bis 90 Gew.% der Komponente B). Im allgemeinen ist eine Vorkondensation des erfindungsgemäßen Bindemittels aus A) und B) nicht notwendig. Wunschgemäß kann eine derartige Vorkondensation gegebenenfalls in Anwesenheit von 0,1 bis 1,0 Gew.% p-Toluolsulfonsäure bei 40 bis 70°C durchgeführt werden, insbesondere bei Verträglichkeitsproblemen der Komponenten oder zur partiellen Veretherung des Vernetzungsmittels.

Die Bindemittel werden mit 0,1 bis 5 Gew.%, bevorzugt 1 bis 3 Gew.%, eines die thermische Aushärtung beschleunigenden Katalysators versetzt und mit Wasser auf 10 bis 25 Gew.% verdünnt.

Als Katalysatoren kommen Säuren bzw. latent saure Katalysatoren und Metallsalze in Betracht. Bevorzugt sind p-Toluolsulfonsäure, Ammoniumchlorid, Ammoniumhydrogenphosphat und die Nitrate, Chloride und Acetate von Magnesium und Calcium. Zur Aushärtung der Bindemittel auf den Substraten kommen die üblichen Härtungsbedingungen zur Anwendung, beispielsweise Temperaturen von 120 bis 250°C und Zeiten von 1 bis 30 Minuten, wobei einer höheren Temperatur eine kürzere Zeit und umgekehrt entspricht.

Die erfindungsgemäßen Bindemittel sind zur Herstellung von Beschichtungsmitteln geeignet.

Die wäßrigen Harz-Lösungen sind insbesondere als Überzugs-, Imprägnier-und Bindemittel für Faservliese geeignet. Die Faservliese können aus natürlichen oder synthetischen organischen Fasern, z.B. aus Polyamiden, Polyethylenglykolterephthalat, Polypropylen, Cellulose und/oder Viskose sowie mineralischen Fasern, z.B. Gesteinswolle oder Glasfasern bestehen, wobei die Fasern die übliche Länge und Stärke aufweisen. Bei der Verfestigung der Vliese werden die erfindungsgemäß hergestellten Harzlösungen im allgemeinen in einer Konzentration von 10 bis 25 Gew.% eingesetzt und durch Imprägnieren der Vliese appliziert, wobei die Vliese z.B. durch ein Bad der Tränkharze geführt und dann in an sich üblicher Weise abgequetscht werden. Man kann die Vliese auch mit den Harzlösungen besprühen und mit geschäumten Harzlösungen behandeln. Die imprägnierten Vliese werden dann gegebenenfalls nach dem Trocknen bei Temperaturen von 15 bis 25°C in an sich üblicher Weise getempert, wobei die Harze aushärten. Die erfindungsgemäßen Bindemittel weisen auch in Anwesenheit von Harnstoff selbst in Mengen von 10 % in wäßriger Lösung eine hohe Lagerstabilität auf bei einem Gehalt an freiem Formaldehyd von 0,1 bis 1,0 Gew.%. Die emittierten Mengen an bei der Härtung abgespaltenem Formaldehyd gemessen nach der in Melliand Textilberichte 54 (1973), Seiten 415 bis 418, 529 bis 532 und 669 bis 675, können bis auf Werte von 0,1 %, bezogen auf Festharz, reduziert werden.

Die mit dem erfindungsgemäßen Bindemittel beschichteten Vliese weisen gute mechanische Eigenschaften auf, wie hohe Reißfestigkeit und hohe Dehnung und überraschend hohe Wasserfestigkeit, die aus den guten Werten für den sogenannten Kochwaschverlust aus der Tabelle entnommen werden kann.

Herstellung von Harzkomponenten A

A/I Aceton-Formaldehyd-Kondensationsprodukt mit einem molaren Aceton-Formaldehyd-Verhältnis von 1 : 5:

In 131,25 g Aceton, 848,31 g Formalin, 40-gew.%ige wäßrige Lösung, 961,0 g Wasser und 131,25 g Butanol wurden 31,75 g technisches Calciumoxid bei 40°C eingetragen und gut gerührt. Nach Erreichen des Gehaltes an freiem Formaldehyd von 0,28 Gew.% wurde das Reaktionsgemisch mit Ameisensäure auf einen pH-Wert von 6,5 eingestellt und Wasser unter vermindertem Druck und bei einer Temperatur von nicht höher als 70°C abdestilliert. Der Rückstand wurde mit 817 g Methanol verdünnt und über ein Druckfilter filtriert. Methanol wurde bei vermindertem Druck und einer Temperatur nicht über 70°C entfernt und der Rückstand mit 130 g Wasser verdünnt.

Es wurden 500 g eines leicht gelb gefärbten Produktes erhalten, dessen Feststoffgehalt nach DIN 53 216 (2 g Einwaage, 2 Stunden bei 125°C) bei 70 Gew.% bei einem Wassergehalt von 24,8 Gew.% lag. Der Feststoffgehalt nach der Planwägeglasmethode nach Heidbrink *) betrug 74,1 Gew.%, der Aschegehalt betrug 0,11 Gew.%, der Gehalt an freiem Formaldehyd lag bei 0,55 Gew.% und die Carbonylzahl betrug 105,0 mg KOH/g Feststoff nach Heidbrink.

A/II Aceton-Formaldehyd-Kondensationsprodukt mit einem molaren Aceton-Formaldehyd-Verhältnis von 1 : 4:

In 132,0 g Aceton, 1203 g Formalin, 40-gew.%ige wäßrige Lösung, 180 g Methanol wurden 33 g technisches Calciumoxid bei 40°C eingetragen und gut gerührt. Nach Erreichen eines Gehaltes an freiem Formaldehyd von 0,9 Gew.% wurde das Reaktionsgemisch mit Ameisensäure bis zu einem pH-Wert von 6,5 angesäuert und entsprechend Produkt A) unter Verwendung von 1400 g Methanol aufgearbeitet. Die Ausbeute betrug 612,0 g.

Der Feststoffgehalt des schwach gefärbten Produktes lag bei 80,0 Gew.%, der Feststoffgehalt nach Heidbrink *) betrug 93,5 Gew.%, der Aschegehalt betrug 0,45 Gew.%, der Gehalt an freiem Formaldehyd lag bei 0,85 Gew.% und die Carbonylzahl betrug 184 mg KOH/g Feststoff nach Heidbrink *) .

Beispiel 1

Ein genadeltes Polyester-Spinnvlies von ca. 190 g/m² wurde mit einer 12 gew.%igen wäßrigen Bindemittelflotte imprägniert und der Überschuß an Bindemittelflotte abgequetscht. Der Abquetschdruck wurde so eingestellt, daß nach dem Trocknen des Vlieses bei 170°C ein Bindemittelgehalt von ca. 20 Gew.%, bezogen auf das Fasergewicht, erzielt wurde. Das imprägnierte und getrocknete Vlies hatte ein Gewicht von ca. 230 g/m².

Die Bindemittelflotte bestand aus

50 g (fest) eines Harzes nach Vorschrift A/I
50 g (fest) 1,3-Dimethylol-4,5-dihydroxyimidazolidinon-2
1 g Ammoniumchlorid

Die Reißfestigkeiten und Auswaschverluste der Vliese sind in Tabelle 1 zusammengestellt.

Beispiel 2

Analog der Arbeitsweise wie im Beispiel 1 wurde ein genadeltes Polyester-Spinnvlies imprägniert und mit einer 12 gew.%igen Bindemittelflotte aus

50 g (fest) eines Harzes nach Vorschrift A/I
50 g (fest) 1,3-Dimethylol-4,5-dihydroxyimidazolidinon-2
3 g (fest) Ammonchlorid

getrocknet.

(*) nach DIN 53 189, Einwaage 0,2 g 70-gew.%ige wäßrige Lösung, Trocknung des Prüfkörpers mit und ohne Substanz über $P_2O_5$ 2 Stunden bei Raumtemperatur im Wasserstrahlvakuum)

Beispiel 3

Analog Beispiel 1 und 2 wurde mit einer ca. 12 gew.%igen Bindemittelflotte aus

60 g (fest) eines Harzes nach Vorschrift A/I
40 g (fest) 1,3-Dimethylol-4,5-dihydroxyimidazolidinon-2
1 g (fest) Ammonchlorid

imprägniert.

Beispiel 4

Analog Beispiel 1 und 2 wurde mit einer ca. 12 gew.%igen Bindemittelflotte aus

60 g (fest) eines Harzes nach Vorschrift A/I
40 g (fest) 1,3-Dimethylol-4,5-dihydroxyimidazolidinon-2
3 g (fest) Ammonchlorid

imprägniert.

Tabelle 1

|  | Reißfestigkeit [N/5 cm Breite] | Dehnung [%] | Auswaschverlust [%] |
|---|---|---|---|
| Vlies nach Beispiel 1 | 637 | 62 | 0,8 |
| Vlies nach Beispiel 2 | 644 | 60 | 1,3 |
| Vlies nach Beispiel 3 | 641 | 62 | 0,9 |
| Vlies nach Beispiel 4 | 624 | 61 | 1,3 |

Ansprüche

1. Formaldehydarme Bindemittel, bestehend im wesentlichen aus
   A) 5 bis 80 Gew.% eines wasserlöslichen, durch alkalische Kondensation hergestellten Produktes der Carbonylzahl 0 bis 200 aus 0,1 bis 0,4 mol eines aliphatischen oder cycloaliphatischen kondensationsfähigen Ketons und 1 mol Formaldehyd und
   B) 20 bis 95 Gew.% 4,5-Dihydroxyimidazolidinon-2 und/oder dessen unveretherten, partiell veretherten oder vollständig veretherten Kondensationsprodukten mit einem aliphatischen Mono-oder Dialdehyd.

2. Bindemittel nach Anspruch 1, bei dem man eine Komponente A) mit einer Carbonylzahl von 40 - 180 verwendet, hergestellt aus Aceton und Formaldehyd mit einem molaren Verhältnis von 1:4 bis 1:6.

3. Bindemittel nach einem der Ansprüche 1 bis 2, bei denen man als Komponente B) 1,3-Dimethylol-4,5-dihydroxyimidazolidinon-2 einsetzt.

4. Wäßrige Lösungen von Bindemitteln gemäß den Ansprüchen 1 bis 3.

5. Verwendung der Bindemittel nach Anspruch 1 bis 3 zur Herstellung von Beschichtungsmitteln.

6. Verwendung der wäßrigen Lösungen gemäß Anspruch 4 zur Beschichtung von Mineral-und Textil-Vliesen.

7. Vliese aus anorganischem oder organischem Fasermaterial, gebunden mit einem gehärteten Bindemittel gemäß den Ansprüchen 1 bis 3.